(19) Europäisches Patentamt
European Patent Office
Office européen des brevets

(11) **EP 1 890 377 B1**

(12) **EUROPÄISCHE PATENTSCHRIFT**

(45) Veröffentlichungstag und Bekanntmachung des Hinweises auf die Patenterteilung:
**16.03.2011   Patentblatt 2011/11**

(51) Int Cl.:
***H02P 6/18*** *(2006.01)*

(21) Anmeldenummer: **06405343.2**

(22) Anmeldetag: **14.08.2006**

(54) **Verfahren zum Bestimmen der Rotorwinkelposition einer rotierenden elektrischen Maschine**

Method for determinating the angular position of a rotational electrical machine

Méthode de détermination de la position angulaire d'une machine électrique tournante

(84) Benannte Vertragsstaaten:
**AT BE BG CH CY CZ DE DK EE ES FI FR GB GR HU IE IS IT LI LT LU LV MC NL PL PT RO SE SI SK TR**

(43) Veröffentlichungstag der Anmeldung:
**20.02.2008   Patentblatt 2008/08**

(73) Patentinhaber: **ABB Schweiz AG**
**5400 Baden (CH)**

(72) Erfinder:
• **Harder, Thorsten**
**5322 Koblenz (CH)**

• **Beiser, Dirk**
**CH-5300 Turgi (CH)**
• **Conticelli, Fabio**
**5405 Dättwil (CH)**
• **Bohren, Patrick**
**5600 Lenzburg (CH)**

(74) Vertreter: **ABB Patent Attorneys**
**C/o ABB Schweiz AG**
**Intellectual Property (CH-LC/IP)**
**Brown Boveri Strasse 6**
**5400 Baden (CH)**

(56) Entgegenhaltungen:
**US-A1- 2002 043 953     US-B1- 6 281 656**

## Beschreibung

### Technisches Gebiet

Die Erfindung bezieht sich auf das Gebiet der Betriebsverfahren rotierender elektrischer Maschinen. Sie geht aus von einem Verfahren zum Bestimmen der Rotorwinkelposition bzw. der Bestimmung des magnetischen Flusswinkels einer rotierenden elektrischen Maschine gemäss dem Oberbegriff des unabhängigen Anspruchs.

### Stand der Technik

Eine heute gängige rotierende elektrische Maschine weist einen Statorwicklungssatz und einen Rotorwicklungssatz auf, wobei der Statorwicklungssatz typischerweise von einer zugehörigen Umrichtereinheit gespeist wird. Die Rotorwinkelposition einer solchen rotierenden elektrischen Maschine wird heute hauptsächlich durch Drehgeber bestimmt, der die gewünschte Rotorwinkelposition, d.h. den Winkel des Rotors bei dessen Drehung bzw. den magnetischen Flusswinkel, liefert. Die Kenntnis über die Position des Rotors bzw. der Position des magnetischen Flussvektors wird typischerweise zur Regelung der Maschine als eine von gängigerweise mehreren Eingangsgrössen benötigt. Drehgeber sind aber sehr anfällig gegen mechanische Beanspruchung und fallen demnach oft aus oder liefern fehlerhafte Rotorwinkelpositionswerte. Zudem ist die Montage aufwendig, da der Drehgeber selbst und zudem die Verkabelung an der Maschine angebracht werden muss, was arbeits- und kostenintensiv ist. Ferner muss ein solcher Drehgeber stets gewartet werden, was zusätzlichen Aufwand bedeutet.

In der US 2002/0043953 A1 ist ein Verfahren zum Bestimmen der Rotorwinkelposition einer rotierenden elektrischen Maschine angegeben, welche Maschine einen Statorwicklungssatz und einen Rotorwicklungssatz aufweist und bei welchem Verfahren der Statorwicklungssatz von einer zugehörigen Umrichtereinheit gespeist wird. Der Statorwicklungssatz wird mittels der Umrichtereinheit innerhalb einer Umdrehung des Rotors bei einer angenommenen Geschwindigkeit des Rotors einmal kurzgeschlossen. Zu dem einmaligen Kurzschlusszeitpunkt wird der Phasenwinkel des Statorstromes ermittelt und ein Korrekturphasenwinkel zu dem zuletzt ermittelten Phasenwinkel addiert.

In der 6,281,656 B1 ist ein weiteres Verfahren zum Bestimmen der Rotorwinkelposition einer rotierenden elektrischen Maschine nach dem Stand der Technik aufgezeigt.

### Darstellung der Erfindung

Aufgabe der Erfindung ist es deshalb, ein Verfahren zum Bestimmen der Rotorwinkelposition einer rotierenden elektrischen Maschine anzugeben, welches sehr einfach realisierbar und robust ist und ohne Drehgeber auskommt. Diese Aufgabe wird durch die Merkmale des Anspruchs 1 gelöst. In den abhängigen Ansprüchen sind vorteilhafte Weiterbildungen der Erfindung angegeben.

Beim erfindungsgemässen Verfahren zum Bestimmen der Rotorwinkelposition einer rotierenden elektrischen Maschine weist die Maschine einen Statorwicklungssatz und einen Rotorwicklungssatz auf, wobei der Statorwicklungssatz von einer zugehörigen Umrichtereinheit gespeist wird. Nach der Erfindung wird dann der Statorwicklungssatz mittels der Umrichtereinheit innerhalb einer Umdrehung des Rotors bei einer angenommenen Geschwindigkeit des Rotors an mindestens drei vorgebbaren Kurzschlusszeitpunkten kurzgeschlossen. Zu jedem Kurzschlusszeitpunkt wird der Phasenwinkel des jeweiligen Statorstromes ermittelt. Weiterhin wird aus an jeweils zwei zeitlich nächst benachbarten Kurzschlusszeitpunkten (ermittelten Phasenwinkeln ein Differenzphasenwinkel gebildet und der minimale Differenzphasenwinkel aus den Differenzphasenwinkeln ermittelt. Bei einem negativen minimalen Differenzphasenwinkel wird ein Korrekturphasenwinkel zum zuletzt ermittelten Phasenwinkel addiert und bei einem positiven minimalen Differenzphasenwinkel wird der Korrekturphasenwinkel vom zuletzt ermittelten Phasenwinkel subtrahiert. Das Ergebnis nach der Addition des Korrekturphasenwinkels beziehungsweise nach der Subtraktion des Korrekturphasenwinkels ist dann die gesuchte Rotorwinkelposition. Die Bestimmung der Rotorwinkelposition einer rotierenden elektrischen Maschine gemäss dem erfindungsgemässen Verfahren ist somit vorteilhaft ohne Drehgeber mit all seinen Nachteilen möglich, so dass insgesamt ein sehr einfach zu realisierendes und robustes Verfahren zur Bestimmung der Rotorwinkelposition einer rotierenden elektrischen Maschine erreicht ist.

Diese und weitere Aufgaben, Vorteile und Merkmale der vorliegenden Erfindung werden aus der nachfolgenden detaillierten Beschreibung bevorzugter Ausführungsformen der Erfindung in Verbindung mit der Zeichnung offensichtlich.

### Kurze Beschreibung der Zeichnungen

Es zeigt:

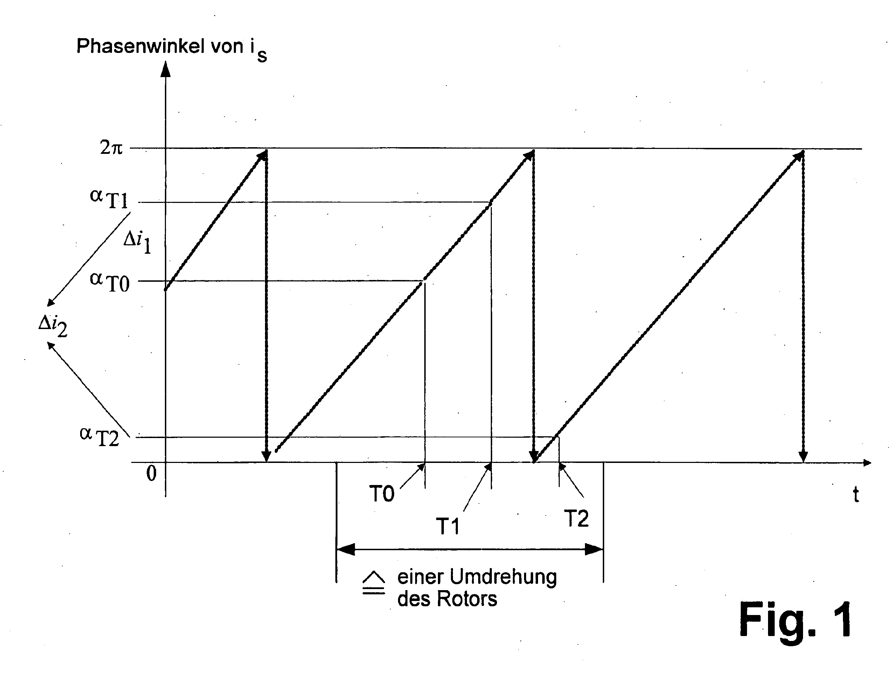

Fig. 1    Zeitlicher Verlauf des Phasenwinkels des Statorstromes der rotierenden elektrischen Maschine beim erfindungsgemässen Verfahren.

Grundsätzlich sind in der Figur gleiche Teile mit gleichen Bezugszeichen versehen.

### Wege zur Ausführung der Erfindung

In Fig.1 ist ein zeitlicher Verlauf des Phasenwinkels des Statorstromes der rotierenden elektrischen Maschine dargestellt, der beim erfindungsgemässen Verfahren auftritt. Der Verlauf des Phasenwinkels des Statorstromes läuft gemäss Fig. 1 von 0 bis $2\pi$, startet dann wieder bei 0 und läuft erneut bis $2\pi$ und so fort. Die Maschine weist einen Statorwicklungssatz und einen Rotorwicklungssatz auf, wobei der Statorwicklungssatz verfahrensmässig von einer zugehörigen Umrichtereinheit gespeist wird. Die rotierende elektrische Maschine ist typischerweise als Synchronmaschine oder Asynchronmaschine ausgebildet.

Beim erfindungsgemässen Verfahren wird nun der Statorwicklungssatz mittels der Umrichtereinheit innerhalb einer Umdrehung des Rotors bei einer angenommenen Geschwindigkeit des Rotors an mindestens drei vorgebbaren Kurzschlusszeitpunkten T0, T1, T2 kurzgeschlossen. In Fig. 1 ist beispielhaft ein zeitliches Intervall eingezeichnet, welches einer Umdrehung des Rotors bei einer angenommenen Geschwindigkeit des Rotors entspricht. Innerhalb dieser Umdrehung wird dann der Statorwicklungssatz mittels der Umrichtereinheit an den mindestens drei vorgebbaren Kurzschlusszeitpunkten T0, T1, T2 kurzgeschlossen. Zu jedem Kurzschlusszeitpunkt T0, T1, T2 wird, wie in Fig. 1 angedeutet, der Phasenwinkel $\alpha_{T0}$, $\alpha_{T1}$, $\alpha_{T2}$ des jeweiligen Statorstromes $i_{ST0}$, $i_{ST1}$, $i_{ST2}$ ermittelt. Vorzugsweise wird der jeweilige Statorstrom $i_{ST0}$, $i_{ST1}$, $i_{ST2}$ insbesondere durch Messung, beispielsweise über Stromsensoren, ermittelt, wobei die Amplitude $\hat{i}_{ST0}$, $\hat{i}_{ST1}$, $\hat{i}_{ST2}$ des jeweiligen Statorstromes $i_{ST0}$, $i_{ST1}$, $i_{ST2}$ und der Phasenwinkel $\alpha_{T0}$, $\alpha_{T1}$, $\alpha_{T2}$ des jeweiligen Statorstromes $i_{ST0}$, $i_{ST1}$, $i_{ST2}$ ermittelt wird. Aus an jeweils zwei zeitlich nächst benachbarten Kurzschlusszeitpunkten T0, T1, T2 ermittelten Phasenwinkeln $\alpha_{T0}$, $\alpha_{T1}$, $\alpha_{T2}$ wird ein Differenzphasenwinkel $\Delta i_1$, $\Delta i_2$ gebildet. Die dazugehörigen Formeln lauten bei angenommenen drei Phasenwinkeln $\alpha_{T0}$, $\alpha_{T1}$, $\alpha_{T2}$ innerhalb einer Umdrehung des Rotors wie folgt:

$$\Delta i_1 = \alpha_{T1} - \alpha_{T0}$$

$$\Delta i_2 = \alpha_{T2} - \alpha_{T1}$$

Aus den Differenzphasenwinkeln $\Delta i_1$, $\Delta i_2$ wird dann ferner der minimale Differenzphasenwinkel $\Delta i_{min}$, insbesondere durch einfachen Wertevergleich, ermittelt. Bei einem negativen minimalen Differenzphasenwinkel $\Delta i_{min}$ wird ein Korrekturphasenwinkel $\Delta i_K$ zum zuletzt ermittelten Phasenwinkel $\alpha_{T2}$ addiert und bei einem positiven minimalen Differenzphasenwinkel $\Delta i_{min}$ wird der Korrekturphasenwinkel $\Delta i_K$ vom zuletzt ermittelten Phasenwinkel $\alpha_{T2}$ subtrahiert. Vorzugsweise ist der der Korrekturphasenwinkel $\Delta i_K$ $\pi/2$. Dabei macht man sich zu nutze, dass der Statorstrom der rotierenden elektrischen Maschine allgemein dem magnetischen Statorfluss der rotierenden elektrischen Maschine um $\pi/2$ nacheilt, und dass die Richtung, d.h. der Winkel, des Vektors des magnetischen Statorflusses im Falle keiner Last an der rotierenden elektrischen Maschine der Rotorwinkelposition (im Falle einer Synchronmaschine) oder der Position des magnetischen Flussvektors (im Falle einer Asynchronmaschine) entspricht. Das Ergebnis nach der vorstehend genannten Addition des Korrekturphasenwinkels $\Delta i_K$ zum zuletzt ermittelten Phasenwinkel $\alpha_{T2}$ beziehungsweise nach der Subtraktion des Korrekturphasenwinkels $\Delta i_K$ vom zuletzt ermittelten Phasenwinkel $\alpha_{T2}$ ist dann die gesuchte Rotorwinkelposition. Ob sich ein negativer minimaler Differenzphasenwinkel $\Delta i_{min}$ ergibt und demnach ein Korrekturphasenwinkel $\Delta i_K$ addiert wird, oder ob sich ein positiver minimaler Differenzphasenwinkel $\Delta i_{min}$ ergibt und demnach ein Korrekturphasenwinkel $\Delta i_K$ subtrahiert wird, hängt von der Drehrichtung des Rotors ab. Die Bestimmung der Rotorwinkelposition der rotierenden elektrischen Maschine gemäss dem erfindungsgemässen Verfahren ist demzufolge vorteilhaft ohne Drehgeber mit all seinen Nachteilen möglich, so dass insgesamt ein sehr einfach zu realisierendes und robustes Verfahren zur Bestimmung der Rotorwinkelposition einer rotierenden elektrischen Maschine erzielt ist. Es hat sich als vorteilhaft erwiesen, dass die Kurzschlusszeitpunkten T0, T1, T2 innerhalb einer Umdrehung des Rotors bei der angenommenen Geschwindigkeit des Rotors äquidistant sind.

Wie bereits vorstehend erwähnt, wird zu jedem Kurzschlusszeitpunkt T0, T1, T2 die Amplitude $\hat{i}_{ST0}$, $\hat{i}_{ST1}$, $\hat{i}_{ST2}$ des jeweiligen Statorstromes $\hat{i}_{ST0}$, $\hat{i}_{ST1}$, $i_{ST2}$ ermittelt. Jede ermittelte Amplitude $\hat{i}_{ST0}$, $\hat{i}_{ST1}$, $\hat{i}_{ST2}$ wird innerhalb eines vorgebbaren Überwachungszeitraums auf einen einstellbaren Amplitudenschwellwert hin überwacht. Weiterhin wird aus den ermittelten Phasenwinkeln $\alpha_{T0}$, $\alpha_{T1}$, $\alpha_{T2}$ innerhalb einer Umdrehung des Rotors ein Gesamtphasendifferenzwinkel $\Delta i$, insbesondere durch Differenzbildung der ermittelten Phasenwinkel $\alpha_{T0}$, $\alpha_{T1}$, $\alpha_{T2}$, gebildet. Der Gesamtphasendifferenzwinkel $\Delta i$ wird dann auf einen einstellbaren Gesamtphasendifferenzwinkelschwellwert hin überwacht. Dreht die Maschine real langsamer als die angenommene Geschwindigkeit, so zeigt sich dies durch Unterschreiten des einstellbaren Amplitudenschwellwertes oder durch Unterschreiten des einstellbaren Gesamtphasendifferenzwinkelschwellwertes. Deshalb wird die angenommene Geschwindigkeit des Rotors bei Unterschreiten des einstellbaren Amplitudenschwellwertes oder bei Unterschreiten des einstellbaren Gesamtphasendifferenzwinkelschwellwertes vorteilhaft reduziert. Mittels der Reduktion der angenommenen Geschwindigkeit des Rotors kann die Rotorwinkelposition dann wieder richtig und eindeutig gemäss den vorstehend angegebenen Schritten bestimmt werden.

**Patentansprüche**

1. **Verfahren zum Bestimmen der Rotorwinkelposition einer rotierenden elektrischen Maschine,**

welche Maschine einen Statorwicklungssatz und einen Rotorwicklungssatz aufweist, bei dem der Statorwicklungssatz von einer zugehörigen Umrichtereinheit gespeist wird, und der Statorwicklungssatz mittels der Umrichtereinheit innerhalb einer Umdrehung des Rotors bei einer angenommenen Geschwindkeit des Rotors kurzgeschlossen wird und zu dem Kurzschlusszeitpunkt der Phasenwinkel des Statorstroms ermittelt wird, **dadurch gekennzeichnet,**

**dass** der Statorwicklungssatz mittels der Umrichtereinheit innerhalb einer Umdrehung des Rotors bei einer angenommenen Geschwindigkeit des Rotors an mindestens drei vorgebbaren Kurzschlusszeitpunkten (T0, T1, T2) kurzgeschlossen wird,

**dass** zu jedem Kurzschlusszeitpunkt (T0, T1, T2) der Phasenwinkel (T0, T1, T2) des jeweiligen Statorstromes (iST0, iST1, iST2) ermittelt wird,

**dass** aus an jeweils zwei zeitlich nächst benachbarten Kurzschlusszeitpunkten (T0, T1, T2) ermittelten Phasenwinkeln (T0, T1, T2) ein Differenzphasenwinkel (i1, i2) gebildet wird,

**dass** der minimale Differenzphasenwinkel (imin) aus den Differenzphasenwinkeln (i1, i2) ermittelt wird, und

**dass** bei einem negativen minimalen Differenzphasenwinkel (imin) ein Korrekturphasenwinkel (iK) zum zuletzt ermittelten Phasenwinkel (T2) addiert wird und bei einem positiven minimalen Differenzphasenwinkel (imin) der Korrekturphasenwinkel (iK) vom zuletzt ermittelten Phasenwinkel (T2) subtrahiert wird.

2. Verfahren nach Anspruch 1, **dadurch gekennzeichnet, dass** der Korrekturphasenwinkel ($\Delta i_K$) $\pi$/2 ist.

3. Verfahren nach Anspruch 1 oder 2, **dadurch gekennzeichnet, dass** die Kurzschlusszeitpunkten (T0, T1, T2) innerhalb einer Umdrehung des Rotors bei der angenommenen Geschwindigkeit des Rotors äquidistant sind.

4. Verfahren nach einem der Ansprüche 1 bis 3 , **dadurch gekennzeichnet, dass** zu jedem Kurzschlusszeitpunkt (T0, T1, T2) die Amplitude ($\hat{i}_{ST0}$, $\hat{i}_{ST1}$, $\hat{i}_{ST2}$,) des jeweiligen Statorstromes ($i_{ST0}$, $i_{ST1}$, $i_{ST2}$) ermittelt wird,

dass jede ermittelte Amplitude ($\hat{i}_{ST0}$, $\hat{i}_{ST1}$, $\hat{i}_{ST2}$) innerhalb eines vorgebbaren Überwachungszeitraums auf einen einstellbaren Amplitudenschwellwert hin überwacht wird, dass aus den ermittelten Phasenwinkeln ($\alpha_{T0}$, $\alpha_{T1}$, $\alpha_{T2}$) innerhalb einer Umdrehung des Rotors ein Gesamtphasendifferenzwinkel ($\Delta i$) gebildet wird,

dass der Gesamtphasendifferenzwinkel ($\Delta i$) auf einen einstellbaren Gesamtphasendifferenzwinkelschwellwert hin überwacht wird,

dass bei Unterschreiten des einstellbaren Amplitudenschwellwertes oder bei Unterschreiten des einstellbaren Gesamtphasendifferenzwinkelschwellwertes die angenommene Geschwindigkeit des Rotors reduziert wird.

**Claims**

1. Method for determining the rotor angular position of a rotating electrical machine, which machine has a set of stator windings and a set of rotor windings, in which method the set of stator windings is fed by an associated converter unit, and the set of stator windings is short-circuited by means of the converter unit within one revolution of the rotor given an assumed speed of the rotor, and the phase angle of the stator current is determined at the short-circuiting time, **characterized**

**in that** the set of stator windings is short-circuited at at least three predeterminable short-circuiting times (T0, T1, T2) by means of the converter unit within one revolution of the rotor given an assumed speed of the rotor,

**in that** the phase angle ($\alpha_{T0}$, $\alpha_{T1}$, $\alpha_{T2}$) of the respective stator current ($i_{ST0}$, $i_{ST1}$, $i_{ST2}$) is determined at each short-circuiting time (T0, T1, T2),

**in that** a differential phase angle ($\Delta i_1$, $\Delta i_2$) is formed from phase angles ($\alpha_{T0}$, $\alpha_{T1}$, $\alpha_{T2}$) determined at in each case two temporally adjacent short-circuiting times (T0, T1, T2),

**in that** the minimum differential phase angle ($\Delta i_{min}$) is determined from the differential phase angles ($\Delta i_1$, $\Delta i_2$) and

**in that**, in the event of a negative minimum differential phase angle ($\Delta i_{min}$), a correction phase angle ($\Delta i_C$) is added to the most recently determined phase angle ($\alpha_{T2}$), and, in the event of a positive minimum differential phase angle ($\Delta i_{min}$), the correction phase angle ($\Delta i_C$) is subtracted from the most recently determined phase angle ($\alpha_{T2}$).

2. Method according to Claim 1, **characterized in that** the correction phase angle ($\Delta i_C$) is $\pi$/2.

3. Method according to Claim 1 or 2, **characterized in that** the short-circuiting times (T0, T1, T2) are equidistant within one revolution of the rotor given the assumed speed of the rotor.

4. Method according to one of Claims 1 to 3, **characterized in that** the amplitude ($\hat{i}_{ST0}$, $\hat{i}_{ST1}$, $\hat{i}_{ST2}$) of the respective stator current ($i_{ST0}$, $i_{ST1}$, $i_{ST2}$) is determined at each short-circuiting time (T0, T1, T2), **in that** each determined amplitude ($\hat{i}_{ST0}$, $\hat{i}_{ST1}$, $\hat{i}_{ST2}$) is monitored within a predeterminable monitoring time period for an adjustable amplitude threshold value, **in that** a total phase difference angle ($\Delta i$) is formed

from the determined phase angles ($\alpha_{T0}$, $\alpha_{T1}$, $\alpha_{T2}$) within one revolution of the rotor,
**in that** the total phase difference angle ($\Delta i$) is monitored for an adjustable total phase difference angle threshold value,
**in that**, in the event of the adjustable amplitude threshold value being undershot or in the event of the adjustable total phase difference angle threshold value being undershot, the assumed speed of the rotor is reduced.

**Revendications**

1.  Procédé de détermination de la position angulaire du rotor d'une machine électrique rotative, ladite machine présentant un jeu d'enroulements de stator et un jeu d'enroulements de rotor, selon lequel le jeu d'enroulements de stator est alimenté par une unité de conversion associée et le jeu d'enroulements de stator est court-circuité au moyen de l'unité de conversion au sein d'un tour du rotor à une vitesse supposée du rotor et l'angle de phase du courant de stator est déterminé à l'instant du court-circuit,
    **caractérisé en ce que**
    le jeu d'enroulements de stator est court-circuité au moyen de l'unité de conversion au sein d'un tour du rotor à une vitesse supposée du rotor en au moins trois instants de court-circuit (T0, T1, T2) pouvant être prédéfinis,
    **en ce que** l'angle de phase ($\alpha_{T0}$, $\alpha_{T1}$, $\alpha_{T2}$) du courant de stator (iST0, iST1, iST2) respectif est déterminé à chaque instant de court-circuit (T0, T1, T2),
    **en ce qu'**un angle de phase de différence ($\Delta i_1$, $\Delta i_2$) est calculé à partir d'angles de phase ($\alpha_{T0}$, $\alpha_{T1}$, $\alpha_{T2}$) respectivement déterminés en deux instants de court-circuit (T0, T1, T2) immédiatement voisins,
    **en ce que** l'angle de phase de différence minimum ($\Delta i_{min}$) est déterminé à partir des angles de phase de différence ($\Delta i_1$, $\Delta i_2$) et
    **en ce que**, dans le cas d'un angle de phase de différence minimum ($\Delta i_{min}$) négatif, un angle de phase de correction ($\Delta i_k$) est additionné au dernier angle de phase ($\alpha_{T2}$) déterminé et, dans le cas d'un angle de phase de différence minimum ($\Delta i_{min}$) positif, l'angle de phase de correction ($\Delta i_k$) est soustrait du dernier angle de phase ($\alpha_{T2}$) déterminé.

2.  Procédé selon la revendication 1, **caractérisé en ce que** l'angle de correction de phase ($\Delta i_k$) est égal à $\pi/2$.

3.  Procédé selon la revendication 1 ou 2, **caractérisé en ce que** les instants de court-circuit (T0, T1, T2) au sein d'un tour du rotor à une vitesse supposée du rotor sont équidistants.

4.  Procédé selon l'une des revendications 1 à 3, **ca-**

**ractérisé en ce que** l'amplitude ($\hat{i}_{ST0}$, $\hat{i}_{ST1}$, $\hat{i}_{ST2}$) du courant de stator ($i_{ST0}$, $i_{ST1}$, $i_{ST2}$) respectif est déterminée pour chaque instant de court-circuit (T0, T1, T2)
**en ce que** chaque amplitude ($\hat{i}_{ST0}$, $\hat{i}_{ST1}$, $\hat{i}_{ST2}$) déterminée à l'intérieur d'une période de surveillance pouvant être prédéfinie est surveillée pour y déceler une valeur de seuil d'amplitude réglable,
**en ce qu'**un angle de différence de phase total ($\Delta i$) est calculé à partir des angles de phase ($\alpha_{T0}$, $\alpha_{T1}$, $\alpha_{T2}$) déterminés au sein d'un tour du rotor,
**en ce que** l'angle de différence de phase total ($\Delta i$) est surveillé pour y déceler une valeur de seuil d'angle de différence de phase total réglable,
**en ce qu'**en cas de franchissement vers le bas de la valeur de seuil d'amplitude réglable ou en cas de franchissement vers le bas de la valeur de seuil d'angle de différence de phase total réglable, la vitesse supposée du rotor est réduite.

Fig. 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20020043953 A1